# EUROPÄISCHE PATENTSCHRIFT

(11) **EP 1 474 645 B1**
(45) Veröffentlichungstag und Bekanntmachung des Hinweises auf die Patenterteilung: **21.06.2006**
(21) Anmeldenummer: 03717179.0
(22) Anmeldetag: 21.01.2003
(51) Int. Cl.: F28F 9/00, F28D 7/16, F01N 3/04, B21D 26/02

(54) **ABGASWÄRMEÜBERTRAGER**
WASTE GAS HEAT EXCHANGER
DISPOSITIF DE TRANSFERT DE CHALEUR DE GAZ BRULES

(30) Priorität: 01.02.2002 DE 10204107
(43) Veröffentlichungstag der Anmeldung: 10.11.2004
(73) Patentinhaber: Behr GmbH & Co. KG, 70469 Stuttgart (DE)
(72) Erfinder: BIRKERT, Arndt, 74626 Bretzfeld (DE); GLÖCKL, Hans, 70599 Stuttgart (DE); HAARSCHEIDT, Knut, 70499 Stuttgart (DE)
(86) Internationale Anmeldenummer: PCT/EP2003/000544
(87) Internationale Veröffentlichungsnummer: WO 2003/064953

(56) Entgegenhaltungen:
- DE-A- 19 907 163
- DE-U- 29 612 361
- US-A- 4 748 836
- US-A- 6 086 110

## Beschreibung

Die Erfindung bezieht sich auf einen Wärmeübertrager, insbesondere einen Abgaswärmeübertrager für Kraftfahrzeuge nach dem Oberbegriff des Patentanspruches 1, wie durch die DE-A 199 07 163 der Mitanmelderin oder durch DE-U-296 12 361 bekannt.

Bei dem durch die DE-A 199 07 163 bekannten Abgaswärmeübertrager wird ein Rohrbündel vom Abgas eines Verbrennungsmotors eines Kraftfahrzeuges durchströmt und auf der Außenseite von einem Kühlmittel, welches dem Kühlmittelkreislauf des Verbrennungsmotors entnommen wird, gekühlt. Derartige Abgaswärmeübertrager, auch Abgaskühler genannt, werden heute bei der Abgasrückführung (AGR) zur Kühlung des Abgases eingesetzt. Bei dem bekannten Abgaskühler sind die Rohrenden des Rohrbündels jeweils in einen Rohrboden eingeschweißt, d. h. fest und dicht mit diesen Rohrböden verbunden. Die Rohrböden selbst sind wiederum mit einem Gehäusemantel, der das Rohrbündel umgibt, verschweißt. Der Gehäusemantel weist eine Kühlmitteleintritts- und eine Kühlmittelaustrittsöffnung auf und wird vom Kühlmittel durchströmt. Beim Betrieb eines solchen Abgaskühlers werden die Abgasrohre auf der Innenseite vom heißen Abgas durchströmt und auf der Außenseite vom Kühlmittel umspült. Dieses Kühlmittel umspült auch die Innenseite des Gehäusemantels. Die Abgasrohre erreichen somit eine wesentlich höhere Temperatur als der Gehäusemantel, wodurch sich unterschiedliche Dehnungen zwischen Abgasrohren und Gehäusemantel ergeben: dies führt zu thermischen Spannungen, d. h. zu Druckspannungen in den Rohren und Zugspannungen im Gehäusemantel. Die Rohre drücken auf die Rohrböden und verursachen Verformungen oder sogar Beschädigungen der Rohr/Boden- oder der Rohrboden/Gehäuse-Verbindungen, d. h. der Abgaskühler kann undicht werden.

Man hat daher bereits bei ähnlichen Abgaskühlern in der EP-A 0 930 429 einen sogenannten Schiebesitz vorgeschlagen, d. h. das Rohrbündel ist im Gehäuse des Abgaskühlers mit einem Festlager und einem Loslager angeordnet, d. h. die Rohre können sich aufgrund des gleitend im Gehäuse gelagerten Rohrbodens ungehindert ausdehnen. Die Thermospannungen werden dadurch zwar vermieden, allerdings ist ein erhöhter konstruktiver Aufwand für einen solchen Schiebesitz erforderlich; zudem besteht die Gefahr, daß bei unzureichender Abdichtung des Schiebesitzes Kühlmittel in das Abgas oder Abgas in das Kühlmittel gelangt.

Es ist daher Aufgabe der vorliegenden Erfindung, einen Wärmeübertrager der eingangs genannten Art dahingehend zu verbessern, daß die temperaturbedingten Spannungen durch einfache Maßnahmen kompensiert, d. h. unzulässige Beanspruchungen des Materials vermieden werden.

Die Lösung dieser Aufgabe ergibt sich für den gattungsgemäßen Wärmeübertrager aus den kennzeichnenden Merkmalen des Patentanspruches 1, d. h. der Gehäusemantel ist mit mindestens einer umlaufenden Dehnungssicke versehen, deren Innenradius etwa der Wandstärke des Gehäuses entspricht. Diese Sicke verleiht dem Gehäusemantel eine hinreichende Elastizität in Längsrichtung der Rohre, so daß der Gehäusemantel durch elastische Dehnung der stärkeren Dehnung der Abgasrohre folgen kann, ohne daß es dabei zu einer unzulässigen Verformung oder einer Beeinträchtigung der Schweißnahtverbindungen zwischen Rohren und Boden und Boden und Gehäuse kommt. Die Dehnungssicke ist zudem einfach, d. h. ohne wesentlich größere Kosten herstellbar und bringt keinerlei Abdichtungsprobleme mit sich. Es ist auch möglich - zur Erhöhung der Elastizität bzw. zur Vergrößerung des Federweges - mehrere Dehnungssicken nach Art eines Faltenbalges vorzusehen.

Nach einer vorteilhaften Ausgestaltung der Erfindung ist der Gehäusemantel einstückig, z. B. aus einem geschweißten Rohr hergestellt, wobei dieses auch einen nicht kreisförmigen Querschnitt, z. B. einen RechteckQuerschnitt aufweisen kann.

Nach einer weiteren vorteilhaften Ausgestaltung der Erfindung wird die Dehnungssicke durch das sogenannte Innenhochdruck-Umformen (IHU) des Gehäusemantels hergestellt. Das IHU, auch Hydroformen genannt, ist ein an sich bekanntes Verfahren, bei welchem geschlossene Gehäuseteile mittels eines flüssigen Druckmediums (Wasser) "aufgeblasen" werden. Die zu verformenden Gehäuse werden in Werkzeugformen der entsprechenden Kontur eingelegt und dann von innen mittels einer Druckflüssigkeit derart beaufschlagt, daß sich das Material des Gehäuses an die Kontur des Werkzeuges anlegt.

Gemäß einer weiteren vorteilhaften Ausgestaltung der Erfindung kann die Dehnungssicke zusätzlich durch axiales Stauchen hergestellt werden, d. h. nachdem in einer ersten Stufe eine vorgeformte Sicke durch IHU hergestellt wurde.

In weiteren vorteilhaften Ausgestaltungen der Erfindung sind Abmessungen für den Gehäusemantel, insbesondere dessen Wandstärke und die Abmessung der Dehnungssicke angegeben, die besonders vorteilhaft sind und die die gewünschte Elastizität des Gehäusemantels bei den auftretenden Beanspruchungen ergeben. Dabei ist auch gewährleistet, daß das Material des Gehäusemantels bei der Herstellung der Dehnungssicke nicht überdehnt, sondern die vorgesehene Festigkeit erreicht wird.

Zur einfachen und kostengünstigen Herstellung der Dehnungssicke im Gehäusemantel des Abgaswärmeübertragers wird die Dehnungssicke in zwei Stufen hergestellt, nämlich zunächst durch ein Innenhochdruck-Umformen zu einer vorgeformten Sicke, die noch nicht die endgültige Form, insbesondere noch nicht die endgültige Höhe (Außenabmessungen) aufweist. In einem zweiten Verfahrensschritt wird der Gehäusemantel axial gestaucht, dadurch fließt das Material der vorgeformten Sicke weiter nach außen, und die Dehnungssicke erhält jetzt ihre endgültige Form. Durch dieses zweistufige Verfahren wird eine Überbeanspruchung des Materials vermieden und gleichzeitig eine definierte Kontur der Dehnungssicke mit einer bestimmten Elastizität erreicht. Dieses Verfahren ist für den Gehäusemantel besonders einfach anwendbar und bedingt keine Änderung in der Konstruktion des Abgaswärmeübertragers.

Ein Ausführungsbeispiel der Erfindung ist in der Zeichnung dargestellt und wird im Folgenden näher beschrieben. Es zeigen:
- **Fig. 1**: eine perspektivische Darstellung eines Teils des Abgaswärmeübertragers,
- **Fig. 2**: einen Längsschnitt durch den Abgaswärmeübertrager,
- **Fig. 3**: einen Querschnitt durch den Gehäusemantel des Abgaswärmeübertragers,
- **Fig. 4**: eine Detaildarstellung der Dehnungssicke des Gehäusemantels,
- **Fig. 5**: einen ersten Verfahrensschritt zur Herstellung der Dehnungssicke und
- **Fig. 6**: einen zweiten Verfahrensschritt zur Herstellung der Dehnungssicke.

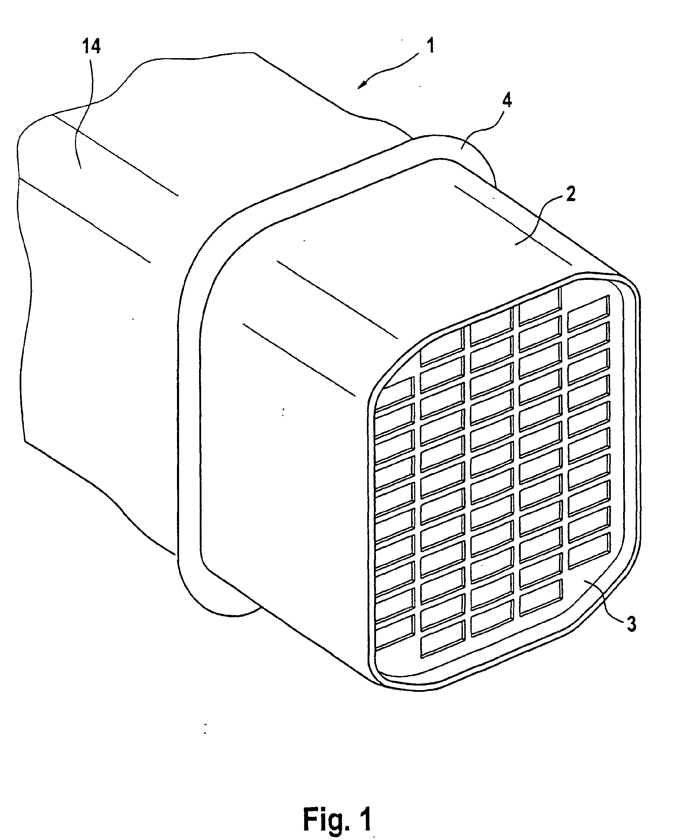

**Fig. 1** zeigt in perspektivischer Darstellung einen Teil eines Abgaswärmeübertragers 1, wie er als Abgaskühler für die Abgasrückführung bei Dieselmotoren für Kraftfahrzeuge eingesetzt wird. Der Abgaswärmeübertrager 1, von dem nur die vordere Hälfte dargestellt ist, weist einen Gehäusemantel 2 und einen Rohrboden 3 auf, in dem nicht dargestellte Abgasrohre aufgenommen sind. Im vorderen Bereich des Gehäusemantels 2, der etwa einen rechteckförmigen Querschnitt mit abgeschrägten Ecken aufweist, ist eine umlaufende Dehnungssicke 4 angeordnet. Dieser Abgaswärmeübertrager 1 wird im Folgenden detaillierter beschrieben, wobei für die selben Teile die selben Bezugsziffern verwendet werden.

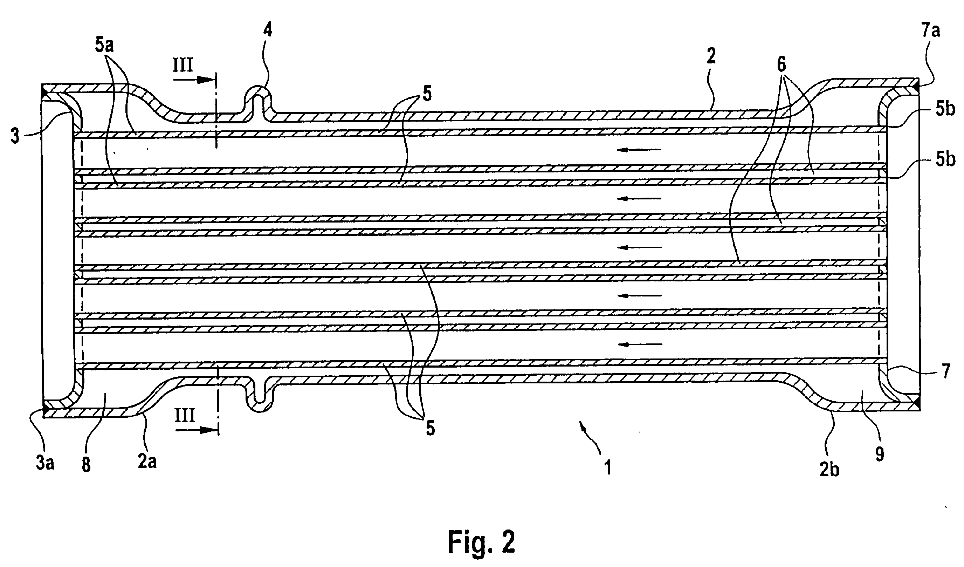

**Fig. 2** zeigt den Abgaswärmeübertrager 1 im Längsschnitt in schematischer Darstellung. Der Gehäusemantel 2 ist aus einem geschlossenen, d. h. geschweißten Rohr aus Edelstahl hergestellt. Innerhalb dieses Gehäusemantels 2 ist ein Rohrbündel, bestehend aus einer Vielzahl von Abgasrohren 5, angeordnet. Diese Abgasrohre 5 sind ebenfalls aus einer Edelstahllegierung hergestellt, die insbesondere warmfest und korrosionsbeständig ist. Der Querschnitt der Abgasrohre 5 ist - wie aufgrund der Ausbildung des Rohrbodens 3 in Fig. 1 ersichtlich - vorzugsweise rechteckförmig. Die Abgasrohre 5 sind zueinander so angeordnet, daß sie zwischen sich äquidistante Spalte 6 belassen, durch welche ein flüssiges Kühlmittel, d. h. das Kühlmittel des Kühlkreislaufes einer nicht dargestellten Brennkraftmaschine strömt. Die Enden 5a, 5b der Abgasrohre 5 sind in dem Rohrboden 3 und einem weiteren Rohrboden 7 aufgenommen und dicht mit diesen Rohrböden 3, 7 verschweißt. Die Rohrböden 3, 7 sind ihrerseits mit dem Gehäusemantel 2 in ihren Umfangsbereichen 3a, 7a mit dem Gehäusemantel 2 verschweißt. Somit wird durch den Gehäusemantel 2, die Rohrböden 3, 7 und die Abgasrohre 5 ein definierter Raum für die Strömung des Kühlmittels begrenzt. Der Gehäusemantel 2 ist in seinen stirnseitigen Bereichen 2a und 2b bezüglich seines Querschnittes etwas erweitert, so daß er dort um das Rohrbündel herum jeweils einen Ringkanal 8 und 9 bildet. In diesem Bereich tritt das Kühlmittel durch einen nicht dargestellten Kühlmitteleinlaß ein, durchströmt die äquidistanten Spalte 6 zwischen den Abgasrohren 5, gelangt zu dem zweiten Ringraum 9, von wo aus das Kühlmittel durch einen nicht dargestellten Kühlmittelauslaß den Abgaswärmeübertrager verläßt. In soweit ist dieser Abgaswärmeübertrager bekannt, z. B. durch die eingangs genannte Druckschrift der Mitanmelderin. Aus dieser Druckschrift geht weiterhin die Zu- und Abströmung des Abgases über einen hier nicht dargestellten Diffusor bzw. einen Austrittsstutzen hervor.

Erfindungsgemäß ist im Gehäusemantel 2 eine Dehnungssicke 4 angeordnet. Diese Dehnungssicke 4, die auch in Fig. 1 als um den gesamten Umfang umlaufende Sicke erkennbar ist, verleiht dem an sich wenig elastischen Gehäusemantel 2 eine Elastizität in Längsrichtung der Abgasrohre 5, welche es dem Gehäusemantel 2 erlaubt, der stärkeren Dehnung der Abgasrohre 5 zu folgen. Die Abgasrohre 5, die auf ihrer Innenseite von heißem Abgas durchströmt werden, nehmen während des Betriebes eine höhere Temperatur als der vom Kühlmittel umspülte Gehäusemantel 2 an und "wachsen" daher stärker als der Gehäusemantel. Somit entstehen in den Abgasrohren 5 Druckspannungen, die sich in die Rohrböden 3 und 7 fortsetzen und von diesen über die Schweißnähte auf den Gehäusemantel 2 übertragen werden, in dem sich dann eine Zugspannung aufbaut. Diese Zugspannung wird aufgrund der Elastizität der Dehnungssicke 4 abgefangen, so daß es nicht zu unzulässigen Verformungen oder gar Schäden kommt.

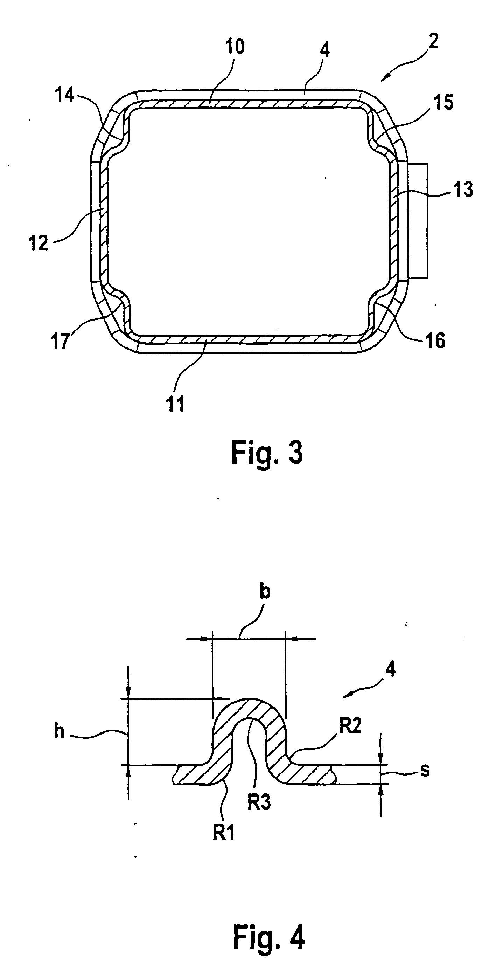

**Fig. 3** zeigt einen Querschnitt durch den Gehäusemantel 2, d. h. ohne Darstellung des Rohrbündels. Der Gehäusemantel 2 hat einen etwa rechteckförmigen Querschnitt mit jeweils zwei parallelen längeren Seitenflächen 10 und 11 sowie etwas kürzeren sich gegenüberliegende Seitenflächen 12 und 13. In den Übergangsbereichen benachbarter kurzer und langer Seitenflächen 12/10, 10/13, 13/11 und 11/12 sind Längssicken 14, 15, 16, 17 zur Versteifung des Gesamtquerschnittes eingeformt. Eine dieser Sicken ist auch in Fig. 1 - dort mit 14 bezeichnet - deutlich erkennbar. Die Dehnungssicke 4 liegt etwas versetzt hinter der Zeichenebene und umgibt den gesamten Querschnitt des Gehäusemantels 2, d. h. sie ist umlaufend ausgebildet.

Der Querschnitt und die Maße dieser Dehnungssicke 4 sind in **Fig. 4** dargestellt. Die Wandstärke des Gehäuses ist mit s bezeichnet und beträgt s ≈ 1,5 mm. Die Sicke 4 weist eine Breite von b = 6 mm und eine Höhe von h ≈ 6 mm auf. Die Sicke ist ferner durch zwei Übergangsradien R1 und R2 gekennzeichnet, die etwa der Wandstärke s entsprechen, d. h. im Bereich von 1,5 mm liegen. Der äußerste Abschnitt der Sicke ist durch einen Innenradius von R3 ≈ 1,5 mm, also etwa der Wandstärke s gekennzeichnet. Durch diese Radien wird sichergestellt, daß sowohl bei der Herstellung als auch beim Betrieb keine unzulässigen Dehnungen oder Spannungsspitzen auftreten.

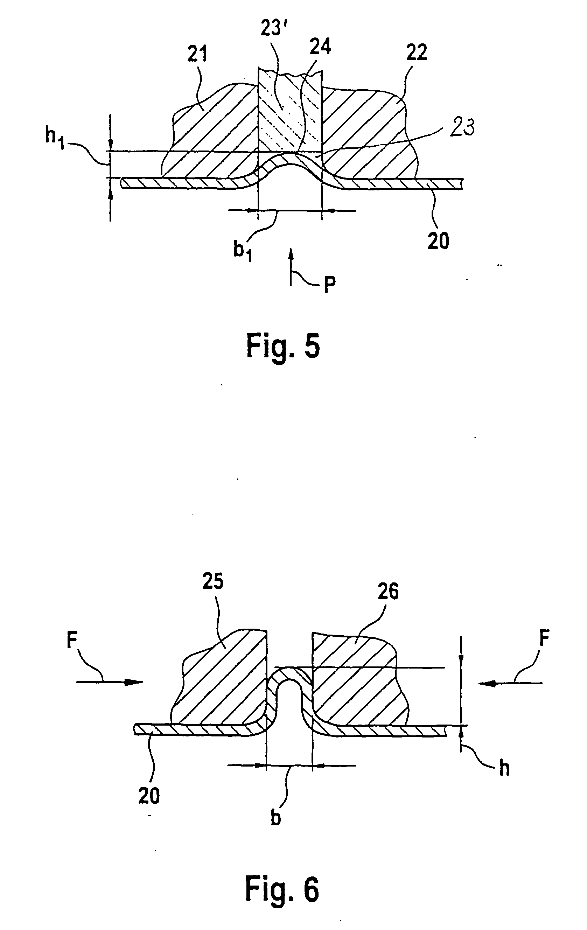

**Fig. 5** zeigt einen ersten Verfahrensschritt zur Herstellung der Dehnungssicke 4 im Gehäusemantel 2. Der Gehäusemantel 2 ist hier nur durch einen Ausschnitt 20 dargestellt. Der Gehäusemantel 20 ist in zwei Werkzeughälften 21 und 22 eingelegt, zwischen denen ein Hohlraum 23 vorgesehen ist, der vorzugsweise durch ein Einlegewerkzeug 23' nach außen abgeschlossen ist. Der Gehäusemantel 20 wird von innen her, dargestellt durch einen Pfeil p, durch Hydroformen bzw. durch IHU druckbeaufschlagt, so daß sich der Gehäusemantel 20 im Bereich des Hohlraumes 23 nach außen bis zur Höhe h1 verformt und eine sickenförmige Vorform 24 annimmt. Diese vorgeformte Sicke 24 weist eine Breite b1 auf, entsprechend dem Hohlraum 23 zwischen den beiden Werkzeughälften 21 und 22.

**Fig. 6** zeigt den zweiten Verfahrensschritt zur Herstellung der Dehnungssicke 4 - dort ist der Gehäusemantel 20 zwischen 2 axial beweglichen Werkzeugen 25 und 26 angeordnet. Der Gehäusemantel 20 wird nach dem Hydroformen gemäß Fig. 5 mittels der Werkzeuge 25 und 26 in axialer Richtung, d. h. entsprechend den Pfeilen F gestaucht, so daß sich die Breite der Sicke von b1 (Fig. 5) auf b verringert und die Höhe h1 (Fig. 5) auf h vergrößert. Nach diesem Verfahrensschritt des axialen Stauchens hat die Sicke ihre endgültige Form bezüglich Höhe und Breite erhalten, d. h. sie wird in zwei aufeinanderfolgenden, unterschiedlichen Verfahrensschritten fertiggestellt.

Die zwei Verfahrensschritte können in einem Werkzeug ausgeführt werden, wobei für den zweiten Verfahrensschritt das Einlegewerkzeug 23' entnommen werden muß, sofern mit einem derartigen Einlegewerkzeug gearbeitet wird. Es ist jedoch auch möglich, die beiden Verfahrensschritte in mehreren Werkzeugen oder in einem Folgewerkzeug durchzuführen.

## Patentansprüche

1. Wärmeübertrager, insbesondere Abgaswärmeübertrager für Kraftfahrzeuge, mit einem von einem gasförmigen Medium durchströmten und von einem flüssigen Kühlmittel umströmten Rohrbündel, dessen Rohre mit ihren Rohrenden in Rohrböden aufgenommen und stoffschlüssig mit diesen verbunden sind, mit einem das Rohrbündel umgebenden Gehäusemantel, der endseitig stoffschlüssig mit den Rohrböden verbunden ist und vom Kühlmittel durchströmt wird, wobei Rohre (5), Rohrböden (3, 7) und Gehäusemantel (2) aus einer warm- und korrosionsfesten metallischen Legierung hergestellt sind, **dadurch genkennzeichnet, daß** der Gehäusemantel (2) mindestens eine umlaufende Dehnungssicke (4) aufweist, deren Innenradius etwa der Wandstärke des Gehäuses entspricht.

2. Wärmeübertrager nach Anspruch 1, **dadurch gekennzeichnet, daß** der Gehäusemantel (2) einstückig ausgebildet ist.

3. Wärmeübertrager nach Anspruch 1 oder 2, **dadurch gekennzeichnet, daß** der Gehäusemantel (2) aus einem geschweißten Rohr hergestellt ist.

4. Wärmeübertrager nach Anspruch 1, 2 oder 3, **dadurch gekennzeichnet, daß** der Gehäusemantel einen nicht kreisförmigen Querschnitt (10, 11, 12, 13) aufweist.

5. Wärmeübertrager nach einem der vorhergehenden Ansprüche, **dadurch gekennzeichnet, daß** die Dehnungssicke (4) durch Innenhochdruck-Umformen (IHU) des Gehäusemantels (2) hergestellt ist.

6. Wärmeübertrager nach einem der vorhergehenden Ansprüchen, **dadurch gekennzeichnet, daß** die Dehnungssicke (4) durch axiales Stauchen des Gehäusemantels (2) hergestellt ist.

7. Wärmeübertrager nach einem der vorhergehenden Ansprüchen, **dadurch gekennzeichnet, daß** der Gehäusemantel (2) eine Wandstärke von 0,5 ≤ s ≤ 2,5 mm, vorzugsweise von s ≈ 1,5 mm aufweist.

8. Wärmeübertrager nach Anspruch 7, **dadurch gekennzeichnet, daß** die Dehnungssicke (4) eine Höhe h von 2 ≤ h ≤ 10 mm, insbesondere von h ≈ 6 mm aufweist.

9. Wärmeübertrager nach Anspruch 7 oder 8, **dadurch gekennzeichnet, daß** die Dehnungssicke (4) eine Breite b von 4 < b < 8 mm, insbesondere von b ≈ 6 mm aufweist.

10. Wärmeübertrager nach einem der Ansprüche 7, 8 oder 9, **dadurch gekennzeichnet, daß** das Verhältnis von Breite zu Höhe, d. h. b : h ≈ 1 beträgt.

## Claims

1. Heat exchanger, in particular an exhaust gas heat exchanger for motor vehicles, with a bundle of tubes through which flows a gaseous medium and around which flows a liquid cooling medium, the ends of the tubes being retained in tube plates which enclose them, with a housing shell firmly attached at its ends to the tube plates and through which the cooling medium flows, the tubes (5), tube plates (3, 7) and housing shell (2) being made of a heat- and corrosion-resistant metallic alloy, **characterised in that** the housing shell (2) has at least one circumferential expansion bead whose inside radius corresponds approximately to the wall thickness of the housing.

2. Heat exchanger according to Claim 1, **characterised in that** the housing shell (2) is made integrally in one piece.

3. Heat exchanger according to Claims 1 or 2, **characterised in that** the housing shell (2) is made from a welded tube.

4. Heat exchanger according to Claims 1, 2 or 3, **characterised in that** the cross-section (10, 11, 12, 13) of the housing shell is not circular.

5. Heat exchanger according to any of the preceding claims, **characterised in that** the expansion bead (4) is produced by internal high-pressure forming (IHPF) of the housing shell (2).

6. Heat exchanger according to any of the preceding claims, **characterised in that** the expansion bead (4) is produced by upsetting of the housing shell (2).

7. Heat exchanger according to any of the preceding claims, **characterised in that** the wall thickness s of the housing shell (2) is 0.5 ≤ s ≤ 2.5 mm, preferably s ≈ 1.5 mm.

8. Heat exchanger according to Claim 7, **characterised in that** the height h of the expansion bead (4) is 2 ≤ h ≤10 mm, in particular h ≈ 6 mm.

9. Heat exchanger according to Claims 7 or 8, **characterised in that** the width b of the expansion bead (4) is 4 ≤ b ≤ 8 mm, in particular b ≈ 6 mm.

10. Heat exchanger according to any of Claims 7, 8 or 9, **characterised in that** the ratio of width to height, i.e. b:h ≈ 1.

## Revendications

1. Echangeur de chaleur, en particulier échangeur de chaleur de gaz d'échappement pour des véhicules automobiles, comprenant un faisceau de tubes traversé par un milieu gazeux et baigné par un moyen de refroidissement liquide, faisceau de tubes dont les tubes, par leurs extrémités, sont logés dans les fonds des tubes et assemblés, avec ces fonds, par continuité de matière, comprenant une enveloppe de carter entourant le faisceau de tubes, laquelle enveloppe de carter est assemblée par continuité de matière, côté extrémité, avec les fonds des tubes, et traversée par le liquide de refroidissement, où les tubes (5), les fonds des tubes (3, 7) et l'enveloppe de carter (2) sont fabriqués dans un alliage métallique résistant à la chaleur et à la corrosion, **caractérisé en ce que** l'enveloppe de carter (2) présente au moins une nervure de dilatation circulaire (4) dont le rayon intérieur correspond à peu près à l'épaisseur de paroi du carter.

2. Echangeur de chaleur selon la revendication 1, **caractérisé en ce que** l'enveloppe de carter (2) est configurde en formant une seule et même pièce.

3. Echangeur de chaleur selon la revendication 1 ou 2, **caractérisé en ce que** l'enveloppe de carter (2) est fabriquée à partir d'un tube soudé.

4. Echangeur de chaleur selon les revendications 1, 2 ou 3, **caractérisé en ce que** l'enveloppe de carter présente une section (10, 11, 12, 13) non circulaire.

5. Echangeur de chaleur selon l'une quelconque des revendications précédentes, **caractérisé en ce que** la nervure de dilatation (4) est produite par formage sous haute pression intérieure (IHU) de l'enveloppe de carter (2).

6. Echangeur de chaleur selon l'une quelconque des revendications précédentes, **caractérisé en ce que** la nervure de dilatation (4) est produite par refoulement axial de l'enveloppe de carter (2) .

7. Echangeur de chaleur selon l'une quelconque des revendications précédentes, **caractérisé en ce que** l'enveloppe de carter (2) présente une épaisseur de paroi de 0,5 mm ≤ s ≤ 2,5 mm, de préférence une épaisseur s ≈ 1,5 mm.

8. Echangeur de chaleur selon la revendication 7, **caractérisé en ce que** la nervure de dilatation (4) présente une hauteur h de 2 mm ≤ h ≤ 10 mm, en particulier une hauteur h ≈ 6 mm.

9. Echangeur de chaleur selon la revendication 7 ou 8, **caractérisé en ce que** la nervure de dilatation (4) présente une largeur b de 4 mm ≤ b ≤ 8 mm, en particulier une largeur b = 6 mm.

10. Echangeur de chaleur selon l'une des revendications 7, 8 ou 9, **caractérisé en ce que** le rapport de la largeur sur la hauteur, c'est-à-dire b : h, est ≈1.
